# EUROPÄISCHE PATENTSCHRIFT

(11) **EP 1 985 411 B1**
(45) Veröffentlichungstag und Bekanntmachung des Hinweises auf die Patenterteilung: **13.07.2011**
(21) Anmeldenummer: 08154769.7
(22) Anmeldetag: 18.04.2008
(51) Int. Cl.: B23Q 3/157

(54) **Werkzeugmaschinenanordnung mit automatischem Werkstück- und Werkzeugwechsel**
Machine tool device with automatic workpiece and tool swap
Agencement de machines-outils doté d'un changement de pièce et d'outil

(30) Priorität: 18.04.2007 DE 102007018368
(43) Veröffentlichungstag der Anmeldung: 29.10.2008
(73) Patentinhaber: Feinmechanik Michael Deckel GmbH & Co. KG, 82362 Weilheim (DE)
(72) Erfinder: Michels, Frank, Dr., 82362 Weilheim (DE); Köhler, Erwin, 82405 Wessobrunn (DE); Weiß, Hubert, 86971 Peiting (DE)
(74) Vertreter: Lohr, Georg

(56) Entgegenhaltungen:
- EP-A- 1 604 775
- EP-A- 1 733 840
- US-A- 4 587 716

## Beschreibung

Die vorliegende Erfindung betrifft eine Werkzeugmaschinenanordnung, umfassend wenigstens eine Werkzeugmaschine mit einer Werkstückaufnahme zum Einspannen eines zu bearbeitenden Werkstückes und einem Werkstückmagazin für zu bearbeitende und bearbeitete Werkstücke, sowie mit einer Werkzeugaufnahme zum Einspannen eines Werkzeuges und einem Werkzeugmagazin, und umfassend einen auf das Werkstückmagazin und/oder das Werkzeugmagazin zugreifenden Roboter.

Derartige Werkzeugmaschinenanordnungen sind in unterschiedlicher Form bekannt und werden vor allem in Verbindung mit CNC-gesteuerten Werkzeugmaschinen eingesetzt.

Bei herkömmlichen Werkzeugmaschinen entnimmt der Werkstückwechsler ein zu bearbeitendes Werkstück aus einem Werkstückmagazin oder dergleichen und setzt es in die Werkstückaufnahme ein. Nach der Bearbeitung entnimmt er das Werkstück aus der Werkstückaufnahme und übergibt es wieder an das Werkstückmagazin. Das Werkstückmagazin besteht beispielsweise aus einer Werkstückzuführstation für die zu bearbeitenden Werkstücke sowie einer Werkstückabführstation für die bereits bearbeiteten Werkstücke.

In ähnlicher Weise entnimmt der Werkzeugwechsler ein für den kommenden Bearbeitungsvorgang vorgesehenes Werkzeug aus dem Werkzeugmagazin und setzt es in die Werkzeugaufnahme ein; wenn der Bearbeitungseinsatz für dieses Werkzeug beendet ist, entnimmt der Werkzeugwechsler das Werkzeug aus der Werkzeugaufnahme und übergibt es wieder dem Werkzeugmagazin.

Werkstückwechsler und Werkzeugwechsler sind im Allgemeinen als doppelarmige Wechselgreifer ausgebildet, deren einer Arm ein Werkstück oder Werkzeug aus der jeweiligen Aufnahme entnimmt und deren anderer Arm nach einer Schwenkbewegung ein neues Werkstück oder Werkzeug in die jeweilige Aufnahme einsetzt.

Insbesondere Werkzeugmagazine sind im Allgemeinen als Kettenmagazine oder Tellermagazine ausgebildet, mittels derer das jeweils auszuwechselnde Werkzeug in eine Transferposition verfahren wird, in der es vom zugeordneten Werkzeugwechsler ergriffen werden kann. Die Werkzeugwechsler sind im Allgemeinen so ausgebildet, dass sie außer der weiter vorne beschriebenen Schwenkbewegung und einer zum Einsetzen und Entnehmen des Werkzeuges in bzw. aus der Werkzeugaufnahme bestimmten Bewegung weitere räumliche Bewegungen ausführen können, um die Wechsler zwischen einer dem Werkzeugmagazin nahen Transferposition in eine der Werkzeugaufnahme nahe Wechselposition zu bewegen und um gegebenenfalls die räumliche Ausrichtung der Werkzeuge an die konstruktiven Vorgaben der Werkzeugmagazine bzw. der Werkzeugaufnahmen anzugleichen.

In ähnlicher Weise sind die Werkstückwechsler an die zum Transportieren der Werkstücke zwischen der Zuführstation, der Werkstückaufnahme und der Abführstation erforderlichen Bewegungen angepasst.

Das gesamte Werkstück- bzw. Werkzeugwechselsystem einer derartigen Werkzeugmaschine mit seinen Lagerungen, Führungen und Antrieben für die unterschiedlichen Bewegungen ist deshalb konstruktiv und baulich sehr aufwendig und stellt damit einen erheblichen Anteil an den Gesamtkosten einer derartigen Werkzeugmaschine dar. Da Werkzeugmaschinen der beschriebenen Art im Allgemeinen als stand alone-Maschinen eingesetzt werden, besitzt jede dieser Maschinen sein eigenes, aufwendiges Werkstück- bzw. Werkzeugwechselsystem. Ein weiterer Nachteil wird darin gesehen, dass die Werkstück- und Werkzeugwechselopertion einen erheblichen Anteil an den unproduktiven Standzeiten der Werkzeugmaschine haben.

Aus der DE 298 21 047 U1 ist beispielsweise bereits eine Werkzeugmaschinenanordnung mit einer Vorrichtung für einen automatischen Werkzeugwechsel bekannt, bei der der Werkzeugwechsler ein Roboter mit wenigstens sechs Achsen oder sechs Freiheitsgraden ist, welcher die Werkzeuge aus einem Werkzeugmagazin entnimmt und direkt in die Werkzeugaufnahme, d.h. in die Arbeitsspindel der Maschine einsetzt. Es versteht sich, dass für einen Werkzeugwechsel die Arbeitsspindel so lange stillsteht, bis das alte Werkzeug entnommen und im Magazin abgelegt und bis das neue Werkzeug aus dem Magazin entnommen und in die Arbeitsspindel eingesetzt ist, was zu langen Standzeiten führt. Außerdem ist der Roboter nicht dafür vorgesehen, einen Werkstückwechsel auszuführen, so dass dafür gesonderte Einrichtungen vorgesehen sein müssen.

Aus der EP 1 733 840 A1 ist eine Bearbeitungsmaschinenanordnung bekannt, bei der ein Roboter Werkzeuge (und gegebenenfalls Werkstücke) aus einem vorratsspeicher entnimmt und an ein jeweils Teil eines automatischen Wechslersystems bildendes Magazin weitergibt, aus dem es an die jeweilige Aufnahme übergeben wird. Dabei werden die eigentlichen Wechselbewegungen, das heißt beispielsweise übergabe des gebrauchten Werkzeuges und übernahme des neuen Werkzeuges durch aktive Bewegungen der Aufnahme, hier der Spindeln ausgeführt, was konstruktiv aufwendig ist. Wenn zusätzlich zu dem beschriebenen Werkzeugwechsel ein werkstückwechsel unter Beteiligung des Roboters durchgeführt werden soll, dann muss dieser zusätzlich zu den für den Transfer zwischen Vorratsspeicher und Magazin erforderlichen Bewegungen zwischen jeweils den Werkzeugen bzw. den Werkstücken zugeordneten Arbeitsräumen verfahrbar sein, was zusätzlichen konstruktiven Aufwand bedeutet.

Die EP 1 604 775 A1 zeigt und beschreibt ein wahlweise für Werkzeuge oder Werkstücke einsetzbares Wechselsystem, bei welchem beispielweise die Werkzeuge durch einen ersten Greifarm aus einem Speicher entnommen, mittels einer Schwenkbewegung an einen Wechselarm übergeben und von diesem mittels einer weiteren Schwenkbewegung in eine spindelnahe Position bewegt wird, wo der Werkzeugwechsel in die Bearbeitungsmaschine stattfindet. Dieses in den Speicher gebundene System ist nicht dazu gedacht und ausgelegt, gleichzeitig einen Werkzeugwechsel und einen Werkstückwechsel durchzuführen. Vielmehr müsste für einen Werkstückwechsel ein entsprechendes, gesondertes System vorgesehen werden.

Es ist die Aufgabe der vorliegenden Erfindung, eine Werkzeugmaschinenanordnung der im Oberbegriff des Anspruches 1 genannten Art zu schaffen, bei der das Werkstück- und Werkzeugwechselsystem konstruktiv und baulich erheblich vereinfacht werden kann.

Diese Aufgabe ist erfindungsgemäß dadurch gelöst, dass dem Roboter ein zwischen einer dem Roboter nahen Werkstück- und/oder Werkzeugtransferposition und einer der Werkzeugmaschine nahen Werkstück- und/oder Werkzeugwechselposition bewegbarer Wechslerträger nachgeordnet ist, an welchem ein Werkstückwechsler und/oder ein Werkzeugwechsler angeordnet ist.

Programmierbare Roboter sind in vielfältigen Ausführungen, Größen und Leistungen am Markt erhältlich. Sie stellen damit verhältnismäßig preisgünstige Geräte dar, die einen erheblichen Teil der an einem Werkstückwechsel bzw. einem Werkzeugwechsel beteiligten Bewegungen übernehmen können, so dass das maschineneigene Wechselsystem entsprechend vereinfacht werden kann. Sie können insbesondere einen Transfer von beliebig angeordneten Magazinen zu den zugeordneten Wechslern übernehmen und dabei gleichzeitig die räumliche Orientierung der Werkstücke bzw. Werkzeuge verändern, so dass die Werkstücke bzw. Werkzeuge in den zugeordneten Wechslern bereits die für den eigentliche Wechsel in die Werkstück- bzw. Werkzeugaufnahme erforderliche räumliche Orientierung haben können.

Der Werkstückwechsler und/oder der Werkzeugwechsler kann deshalb konstruktiv so ausgebildet sein, dass er jeweils - außer der eigentlichen Wechselbewegung - nur noch zwischen einer dem Roboter nahen Transferposition und einer der jeweiligen Aufnahme nahen Wechselposition bewegt werden muss. Es hat sich gezeigt, dass damit insgesamt eine erhebliche konstruktive und bauliche Vereinfachung der Werkzeugmaschinenanordnung erreichbar ist.

Erfindungsgemäß ist vorgesehen, dass der Werkstückwechsler und der Werkzeugwechsler an einem gemeinsamen Wechslerträger angeordnet sind, welcher zwischen den Werkstück- bzw. Werkzeugtransferpositionen und den Werkstück- bzw. Werkzeugwechselpositionen bewegbar ist. Dabei ist es möglich, das System konstruktiv so zu gestalten, dass die Transferposition für Werkstück und Werkzeug und/oder die Wechselposition für Werkstück und Werkzeug zusammenfallen, so dass die jeweiligen Transfer- und Wechseloperationen gleichzeitig erfolgen können.

Eine weitere konstruktive Vereinfachung ergibt sich, wenn der Wechslerträger als längs einer linearen Zubringerführung verschiebbarer Wechslerschlitten ausgebildet ist. Lineare Führungen und Antriebe stellten baulich einfache, preiswerte und betriebssichere Maschinenelemente dar.

Der Wechslerträger und die zugeordnete Zubringerführung, die in der nachfolgenden Beschreibung auch als Zubringerachse bezeichnet werden, bilden jeweils einen Bestandteil der Werkzeugmaschine, während der Roboter ein gesondertes Aggregat bildet, welches auf Anforderung der Werkzeugmaschine tätig wird.

In besonders günstiger Weise wirkt sich die erfindungsgemäße Lösung bei einer Werkzeugmaschinenanordnung aus, bei der einem zentralen Roboter mehrere Werkzeugmaschinen zugeordnet sind. In diesem Fall übernimmt ein einziger Roboter für mehrere Werkzeugmaschinen alle die Bewegungen, die nicht mehr bei den jeweiligen Wechslern liegen, so dass sich der weiter vorne beschriebene Effekt einer Verringerung des baulichen Aufwandes entsprechend der Anzahl der beteiligten Werkzeugmaschinen vergrößert. Dabei sind die Werkzeugmaschinen vorzugsweise im Wesentlichen punktsymmetrisch zu dem Roboter angeordnet, d.h. in einem Kreis um eine vertikale Schwenkachse des Roboters.

Der eigentliche Werkstückwechsler und/oder der Werkzeugwechsler ist vorzugsweise jeweils als doppelarmiger Wechselarm mit an den beiden Armenden angeordneten Greifeinrichtungen ausgebildet, wie sie allgemein bekannt sind.

Das Werkstückmagazin ist gemäß einer bevorzugten Ausgestaltung der Erfindung mit auswechselbaren Werkstückpaletten zur Aufnahme von zu bearbeitenden und von bearbeiteten Werkstücken bestückbar, während das Werkzeugmagazin als einfaches Ablage- bzw. Steckmagazin ausgebildet ist, wie anhand eines Ausführungsbeispieles näher erläutert wird.

Ein Ausführungsbeispiel der Erfindung ist in der Zeichnung dargestellt und im Folgenden näher beschrieben. Dabei zeigen:
- Fig. 1: in einer perspektivischen Darstellung eine Werkzeugmaschine mit einem Werkstückwechsler und einem Werkzeugwechsler, sowie einen zugeordneten Roboter zum Be- und Entladen des Werkstückwechslers bzw. des Werkzeugwechslers;
- Fig. 2: in einer perspektivischen Ansicht einen der Werkzeugmaschine zugeordneten, längs einer Zubringerführung verschiebbaren Wechslerschlitten, an welchem der Werkstückwechsler und der Werkzeugwechsler angeordnet sind; und
- Fig. 3: in einer perspektivischen Darstellung zwei einem zentralen Roboter zugeordnete Werkzeugmaschinen.

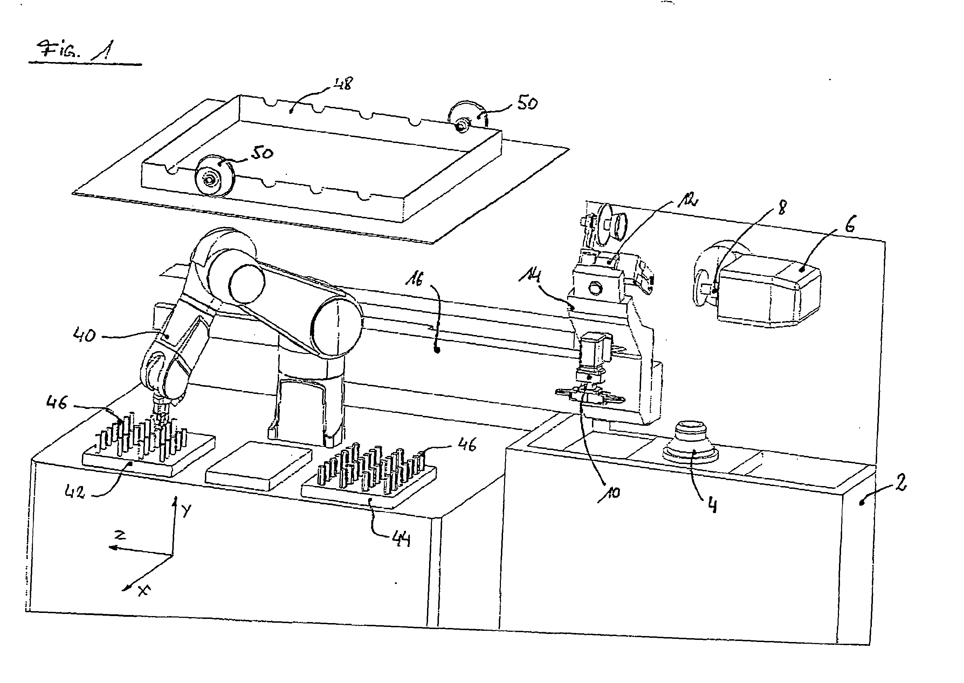

Die in Fig. 1 beispielhaft dargestellte Werkzeugmaschine 2 ist eine Werkzeugschleifmaschine zum Schleifen von Bohrwerkzeugen, Fräswerkzeugen und dergleichen. Die im Folgenden genannten räumlichen Achsenrichtungen der Werkzeugmaschine entsprechen dem unten links angegebenen räumlichen Achsensystem.

Die Werkzeugmaschine 2 weist in herkömmlicher Weise eine vertikal ausgerichtete, um eine zur Y-Achse parallele Drehachse drehbare Werkstückaufnahme 4 zum Einspannen eines zu bearbeitenden Werkstückes auf sowie einen Spindelkopf 6, welcher im dargestellten Ausführungsbeispiel entlang einer zur Y-Achse parallelen Achse vertikal verfahrbar und um eine zur X-Achse parallele Schwenkachse verschwenkbar ist. Im Spindelkopf 6 ist eine Werkzeugspindel zum Einspannen eines Werkzeuges drehantreibbar gelagert. Die Fig. 1 zeigt den Spindelkopf 6 in einer Position, bei der die Werkzeugspindel 8 horizontal und parallel zur Z-Achse ausgerichtet ist.

Ein Werkstückwechsler 10 dient in an sich bekannter Weise zum Auswechseln eines bearbeiteten Werkstückes gegen ein zu bearbeitendes Werkstück. Ein Werkzeugwechsler 12 dient in ähnlicher Weise zum Auswechseln eines Werkzeuges gegen ein anderes.

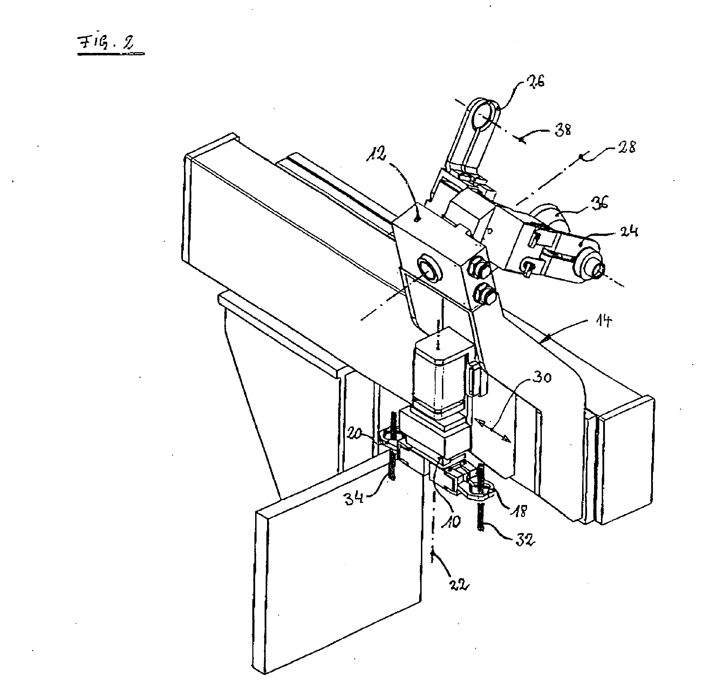

Wie insbesondere die Fig. 2 zeigt, sind der Werkstückwechsler 10 und der Werkzeugwechsler 12 an einem gemeinsamen Wechslerträger 14 angeordnet, welcher als längs seiner linearen Zubringerführung 16 verschiebbarer Wechslerschlitten ausgebildet ist.

Der Werkstückwechsler 10 ist in an sich bekannter Weise als zweiarmiger Wechsler mit an den Armenden angeordneten Greifern 18 bzw. 20 ausgebildet, die geschlossen und geöffnet werden können. Der Werkstückwechsler 10 ist entlang einer vertikalen Achse 22 verschiebbar, um Werkstücke in die Werkstückaufnahme 4 einsetzen bzw. aus dieser entnehmen zu können; er ist außerdem um die vertikale Achse 22 drehbar, um die Wechselbewegung durchführen zu können.

Der Werkzeugwechsler 12 ist ebenfalls als zweiarmiger Wechsler mit an dem Armenden vorgesehenen Greifern 24 bzw. 26 ausgebildet. Er ist um eine horizontale Achse 28 schwenkbar, um die Wechselbewegung ausführen zu können; das Einsetzen eines Werkzeuges in die Werkzeugspindel 8 bzw. das Entnehmen eines Werkzeuges aus derselben erfolgt durch eine Bewegung des Wechslerträgers 14 in Richtung des Pfeiles 30, d.h. entlang der Zubringerführung 16.

Fig. 2 zeigt den Werkstückwechsler 10 mit zwei von den Greifern 18 bzw. 20 gehaltenen Werkstücken 32 bzw. 34, und den Werkzeugwechsler 12 mit zwei von den Greifern 24 bzw. 26 gehaltenen Werkzeugen 36 bzw. 38, im dargestellten Ausführungsbeispiel jeweils Schleifscheiben.

Wie insbesondere aus der Fig. 1 ersichtlich ist, ist der Werkzeugmaschine 2 ein Roboter 40 zugeordnet, der so ausgelegt ist, dass er einerseits auf in Paletten 42 bzw. 44 angeordnete Werkstücke 46, andererseits auf in einem Werkzeugmagazin 48 angeordnete Werkzeuge 50 zugreifen kann, um diese jeweils an den Werkstückwechsler 10 bzw. an den Werkzeugwechsler 12 zu übergeben. Zu diesem Zweck ist der Wechslerträger 14 zwischen einer dem Roboter 40 nahen Position, die als Werkstücktransferposition bzw. Werkzeugtransferposition dient, und einer der Werkstückaufnahme 4 bzw. dem Spindelkopf 6 nahen Position, die als Werkstückwechselposition bzw. Werkzeugwechselposition dient, verfahrbar.

Die Funktionsweise der Gesamtanlage ist wie folgt: Während eines Bearbeitungsvorganges der Werkzeugmaschine 2, bei der ein in der Werkstückaufnahme 4 aufgenommenes Werkstück mittels eines in der Werkzeugspindel 8 eingespannten Werkzeuges bearbeitet wird, fährt der Wechslerträger 14 aus der in Fig. 1 dargestellten Werkstück- bzw. Werkzeugwechselposition in eine dem Roboter 40 nahe Position, bei der der Roboter 40 ein bearbeitetes Werkstück aus dem Werkstückwechsler 10 entnehmen und ein zu bearbeitendes Werkstück in diesen einsetzen kann. Falls erforderlich, kann der Roboter 40 in dieser Phase auch dem Werkzeugwechsler ein nicht mehr benötigtes Werkzeug entnehmen und ein beim nächsten Arbeitsgang benötigtes Werkzeug einsetzen.

Wenn der laufende Bearbeitungsvorgang zu Ende geht, fährt der Wechslerträger 14 in die der Werkstückaufnahme 4 bzw. dem Spindelkopf 6 nahe Position, so dass nach dem Abstellen der Werkzeugmaschine ein Werkstückwechsel und gegebenenfalls ein Werkzeugwechsel vorgenommen werden kann. Sobald diese Wechselvorgänge beendet sind, fährt der Wechslerträger 14 aus dem Arbeitsbereich der Maschine heraus und wieder in die dem Roboter nahe Position. Sobald er den Arbeitsbereich der Werkzeugmaschine verlassen hat, kann der nächste Arbeitsvorgang beginnen.

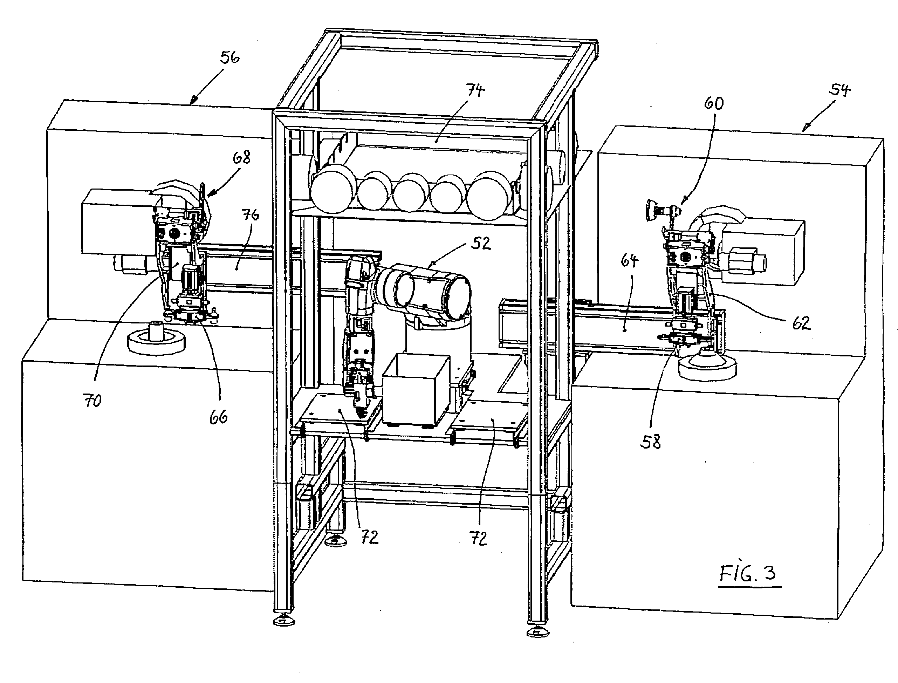

Fig. 3 zeigt eine Anordnung, bei der einem zentralen Roboter 52 zwei Werkzeugmaschinen 54 bzw. 56 zugeordnet sind.

Die Werkzeugmaschine 54 ist wie im Beispiel der Fig. 1 und 2 mit einem Werkstückwechsler 58 und einem Werkzeugwechsler 60 ausgestattet, die an einem gemeinsamen Wechslerträger 62 angeordnet sind. Der Wechslerträger 62 ist entlang einer linearen Zubringerführung 64 zwischen der in der Fig. 3 dargestellten Werkstück- bzw. Werkzeugwechselposition und einer dem Roboter 52 nahen Werkstück- bzw. Werkzeugtransferposition verfahrbar.

Die Werkzeugmaschine 56 ist in der gleichen Weise mit einem einen Werkstückwechsler 66 und einen Werkzeugwechsler 68 tragenden Wechslerträger 70 ausgestattet, welcher ebenfalls zwischen der dargestellten Position und einer dem Roboter 52 nahen Position entlang einer Zubringerführung 76 verfahrbar ist.

Der Roboter 52 ist so ausgelegt, dass er beide Werkstückwechsler 58 bzw. 66 mit aus Paletten 72 entnommenen Werkstücken bestücken kann, und dass er beide Werkzeugwechsler 60 bzw. 68 mit aus einem Werkzeugmagazin 74 entnommenen Werkzeugen bestücken kann.

Auf diese Weise kann der Roboter 52 während der Bearbeitungszeit der Werkzeugmaschinen 54, 56 die Werkstückwechsler 58, 66 bzw. die Werkzeugwechsler 60, 68 neu bestücken, so dass sie für die nächsten Wechselvorgänge vorbereitet sind, die dann mit kürzesten Standzeiten durchgeführt werden können.

Wie nicht im Einzelnen dargestellt ist sondern sich vielmehr für den Fachmann ergibt, können einem zentralen Roboter auch mehr als zwei Werkzeugmaschinen zugeordnet werden, sofern die diesen zugeordneten Wechslerträger in eine dem Roboter nahe Position fahren können, in der der Roboter die Werkstück- bzw. Werkzeugwechsler bestücken kann.

## Patentansprüche

1. Werkzeugmaschinenanordnung, umfassend wenigstens eine Werkzeugmaschine (2) mit einer Werkstückaufnahme (4) zum Einspannen eines zu bearbeitenden Werkstückes und einem Werkstückmagazin (42, 44) für zu bearbeitende und bearbeitete Werkstücke, mit einem automatischen Werkstückwechsler (10), sowie mit einer Werkzeugaufnahme (8) zum Einspannen eines Werkzeuges und einem Werkzeugmagazin (48) und einem automatischen Werkzeugwechsler (12), und umfassend einen Roboter (40), der einen Werkstücktransfer zwischen dem Werkstückmagazin (42,44) und dem Werkstückwechsler (10) und einen Werkzeugtransfer zwischen dem Werkzeugmagazin (48) und dem Werkzeugwechsler (12) durchführen kann, **dadurch gekennzeichnet, dass** dem Roboter (40) ein zwischen einer dem Roboter nahen Werkstück- bzw. Werkzeugtransferposition und einer der Werkzeugmaschine (2) nahen Werkstück bzw. Werkzeugwechselposition bewegbarer Wechslerträger (14) nachgeordnet ist, an welchem der automatische Werkstückwechsler (10) und der automatische Werkzeugwechsler (12) angeordnet sind.

2. Werkzeugmaschinenanordnung nach Anspruch 1, **dadurch gekennzeichnet, dass** der Wechslerträger (14) als längs einer linearen Zubringerführung (16) verschiebbarer Wechslerschlitten ausgebildet ist.

3. Werkzeugmaschinenanordnung nach Anspruch 2, **dadurch gekennzeichnet, dass** der Wechslerträger (14) und die Zubringerführung (16) jeweils einen Bestandteil der Werkzeugmaschine bilden.

4. Werkzeugmaschinenanordnung nach einem der Ansprüche 1 bis 3, **dadurch gekennzeichnet, dass** einem zentralen Roboter (52) mehrere Werkzeugmaschinen (54, 56) zugeordnet sind.

5. Werkzeugmaschinenanordnung nach Anspruch 4, **dadurch gekennzeichnet, dass** die werkzeugmaschinen (54, 56) im Wesentlichen punktsymmetrisch zu dem Roboter (52) angeordnet sind.

6. Werkzeugmaschinenanordnung nach einem der Ansprüche 1 bis 5, **dadurch gekennzeichnet, dass** der Werkstückwechsler (10) und/oder der Werkzeugwechsler (12) jeweils als doppelarmiger Wechselarm mit an den beiden Armenden angeordneten Greifeinrichtungen (18, 20; 24, 26) ausgebildet ist.

7. Werkzeugmaschinenanordnung nach einem der Ansprüche 1 bis 6, **dadurch gekennzeichnet, dass** das Werkstückmagazin mit auswechselbaren Werkstückpaletten (42, 44) zur Aufnahme von zu bearbeitenden und von bearbeiteten Werkstücken bestückbar ist.

8. Werkzeugmaschinenanordnung nach einem der Ansprüche 1 bis 7, **dadurch gekennzeichnet, dass** das Werkzeugmagazin (48) als einfaches Ablagemagazin ausgebildet ist.

## Claims

1. A machine tool arrangement comprising at least one machine tool (2) having a workpiece receiver (4) for clamping a workpiece to be processed and a workpiece magazine (42, 44) for workpieces to be processed and workpieces which have been processed, comprising an automatic workpiece changer (10) and comprising a tool receiver (8) for clamping a tool and a tool magazine (48) and an automatic tool changer (12), and comprising a robot (40) which can execute a workpiece transfer between the workpiece magazine (42, 44) and the workpiece changer (10) and a tool transfer between the tool magazine (48) and the tool changer (12), **characterised in that** a changer carrier (14) which can be moved between a workpiece or tool transfer position near the robot and a workpiece or tool change position near the machine tool (2) is located downstream of the robot (40), on which carrier the automatic workpiece changer (10) and the automatic tool changer (12) are located.

2. The machine tool arrangement according to claim 1, **characterised in that** the changer carrier (14) is configured as a changer carriage which can be displaced along a linear feeder guide (16).

3. The machine tool arrangement according to claim 2, **characterised in that** the changer carrier (14) and the feeder guide (16) each form a part of the machine tool.

4. The machine tool arrangement according to any one of claims 1 to 3, **characterised in that** a plurality of machine tools (54, 56) are assigned to a central robot (52).

5. The machine tool arrangement according to claim 4, **characterised in that** the machine tools (54, 56) are arranged substantially point-symmetrically to the robot (52).

6. The machine tool arrangement according to any one of claims 1 to 5, **characterised in that** the workpiece changer (10) and/or the tool changer (12) is each configured as a double-armed changing arm with gripping devices (18, 20; 24, 26) provided on both arm ends.

7. The machine tool arrangement according to any one of claims 1 to 6, **characterised in that** the workpiece magazine can be equipped with exchangeable workpiece pallets (42, 44) for receiving workpieces to be processed and workpieces which have been processed.

8. The machine tool arrangement according to any one of claims 1 to 7, **characterised in that** the tool magazine (48) is configured as a simple storage magazine.

## Revendications

1. Disposition de machine-outil comprenant au moins une machine-outil (2) avec un réceptacle de pièce (4) pour le serrage d'une pièce à usiner et un magasin de pièces (42, 44) pour les pièces à usiner et usinées, avec un changeur de pièce automatique (10), ainsi qu'avec un réceptacle d'outil (8) pour le serrage d'un outil et un magasin d'outils (48) et un changeur d'outil automatique (12), et comprenant un robot (40) qui peut exécuter un transfert de pièces entre le magasin de pièces (42, 44) et le changeur de pièce (10) et un transfert d'outils entre le magasin d'outils (48) et le changeur d'outil (12), **caractérisée en ce qu'**il est prévu monté à la suite du robot (40) un support de changeur (14) mobile entre une position de transfert de pièce ou d'outil proche du robot et une position de changement de pièce ou d'outil proche de la machine-outil (2), sur lequel le changeur de pièce automatique (10) et le changeur d'outil automatique (12) sont disposés.

2. Disposition de machine-outil selon la revendication 1, **caractérisée en ce que** le support de changeur (14) est conformé comme un chariot de changeur capable de translation le long d'un guide d'amenée linéaire (16).

3. Disposition de machine-outil selon la revendication 2, **caractérisée en ce que** le support de changeur (14) et le guide d'amenée (16) font tous deux partie de la machine-outil.

4. Disposition de machine-outil selon l'une des revendications 1 à 3, **caractérisée en ce qu'**un robot central (52) est associé à plusieurs machines-outils (54, 56).

5. Disposition de machine-outil selon la revendication 4, **caractérisée en ce que** les machines-outils (54, 56) sont pour l'essentiel disposées en symétrie ponctuelle par rapport au robot (52).

6. Disposition de machine-outil selon l'une des revendications 1 à 5, **caractérisée en ce que** le changeur de pièce (10) et/ou le changeur d'outil (12) sont conformés chacun comme un bras de changeur à double bras avec les dispositifs de préhension (18, 20 ; 24, 26) disposés aux deux extrémités de bras.

7. Disposition de machine-outil selon l'une des revendications 1 à 6, **caractérisée en ce que** le magasin d'outils peut être équipé de palettes de pièces (42, 44) interchangeables pour recevoir des pièces à usiner et usinées.

8. Disposition de machine-outil selon l'une des revendications 1 à 7, **caractérisée en ce que** le magasin d'outils (48) est réalisé comme un magasin de dépôt simple.
